Europäisches Patentamt

(19) European Patent Office

Office européen des brevets

(11) Publication number: **0 026 975**
**A1**

## (12) EUROPEAN PATENT APPLICATION

(21) Application number: **80302995.8**

(22) Date of filing: **29.08.80**

(51) Int. Cl.³: **C 08 G 8/08**
// H01B3/36

(30) Priority: **08.09.79 GB 7931241**

(43) Date of publication of application: **15.04.81**
Bulletin 81/15

(84) Designated Contracting States: **DE FR GB IT**

(71) Applicant: **BP Chemicals Limited, Britannic House Moor Lane, London, EC2Y 9BU (GB)**

(72) Inventor: **Perkins, Michael Edwin BP Chemicals Limited, Belgrave House 76 Buckingham Palace Road, London SWIW OSU (GB)**

(74) Representative: **Harry, John et al, BP TRADING LIMITED Patents & Licensing Division Chertsey Road, Sunbury-on-Thames Middlesex TW16 7LN (GB)**

(54) Process for the production of phenolic resins.

(57) This invention relates to a process for producing phenolic resins by reacting formaldehyde with a phenolic reactant which contains an isomeric mixture of $C_2$-$C_5$-mono-alkyl phenols and in which the meta-monoalkyl phenol content is from 10 to 50% by weight. The isomeric mixture of mono-alkyl phenols, which may contain in addition unmodified phenol, is derived by alkylating phenol with an olefin and subsequently isomerising the crude alkylate to improve the meta-isomer content thereof. Resins produced using the phenolic reactant as above can be used for producing laminates which have a good balance of physical properties associated normally with those required in industrial laminates.

0026975

1
## PROCESS FOR THE PRODUCTION OF PHENOLIC RESINS

The present invention relates to the production of phenolic resins by condensation of phenol and formaldehyde or a formaldehyde donor.

It is well known to produce phenolic resins by condensation of phenolic materials with formaldehyde or substances capable of acting as formaldehyde donors, for example hexamethylene tetramine.

Mixtures rich in meta-cresol have been used for many years in the production of certain phenolic resins. However, supply of meta-cresol has diminished in recent years as a result of the reduction in coal tar production which has taken place. Coal tar is the main source of cresol. It is highly desirable to find alternatives to meta-cresol containing mixtures for the production of phenolic resins.

It has been suggested in an article by Freeman, JH et al entitled, "Cured Phenolic Resins Plasticized by Substituents on the Aromatic Ring" in Society of Plastics Engineers Journal, Vol 17 (7), July 1961 pp 673 - 677 that pure monoalkyl phenols or binary mixtures of pure monoalkyl phenols may be used as integral plasticizers in flexible laminated resins. However this method needs the use of pure materials as stated above.

It has now been found that ternary mixtures of monoalkyl phenols containing all the three isomers, namely the ortho-, meta- and para-isomers, of the type produced by alkylation of phenol with an olefin followed by isomerisation, can be used directly to produce laminated resins of the desired physical characteristics.

1

According to the present invention a process for producing a phenolic resin by reacting a phenolic reactant with formaldehyde or a formaldehyde donor is characterised in that the phenolic reactant comprises a mixture of the ortho-, meta- and para-substituted isomers of mono-alkyl phenol in which (i) the alkyl group has 2 to 5 carbon atoms, and (ii) the meta-monoalkyl phenol content is from 10 to 50% by weight of the total phenolic reactant.

The alkyl group in the mono-alkyl phenol constituent of the phenolic material preferably contains 3 to 4 carbon atoms. Examples of suitable alkyl groups are n-alkyl, secondary alkyl or tert-alkyl. It is preferred to use alkyl phenol mixtures in which the alkyl group is isopropyl and/or sec-butyl.

The isomeric mixture of mono-alkyl phenols comprises in proportion by weight percent the ortho-, meta- and para-isomers suitably in the range of 5-10:25-40:5-15 respectively. The remainder in this mixture may be made up from unmodified phenol. A particularly convenient source of the isomeric mixture of mono-alkyl phenols used in the phenolic reactant is that derived by the alkylation of phenol followed by isomerisation of the crude alkylate thus formed directly without any intermediate purification or separation steps. The object of the isomerisation step is to increase the meta-isomer content of the alkylate. The mixture thus produced contains between 30 and 35% by weight of unmodified phenol. One such method of producing a mixture of isomeric mono-alkyl phenols enriched in the meta-isomer is described in Research Disclosure No: 19309 published in May 1980 (No. 193). Thus, a particularly suitable method of making such mixtures of isomeric mono-alkyl phenols is to react phenol with an olefin in the presence of a Bronsted or Lewis acid alkylation catalyst at a temperature in the range 50 to 160°C for a time sufficient to give a molar conversion of alkyl phenol of 10 to 90%, the activity of the catalyst being such as to give a conversion in 10 hours, followed by isomerisation of the resulting alkylation product in the presence of a Bronsted or Lewis acid catalyst at a temperature greater than 160°C for at least one hour.

Examples of alkylation catalysts which can be used in the first step are bleaching earths, e.g. montmorillonite, activated by treatment with a mineral acid, preferably sulphuric acid.

The process described above inevitably produces a certain amount of the dialkylisomers in addition to the desired mixture of mono-alkyl phenols. Surprisingly, this crude isomerised product containing the dialkyl isomers can be used directly, without any purification or separation of the intermediates or the final product, without any adverse effect on the resins produced in spite of the emphasis to the contrary in the Freeman et al article referred to above to exclude the dialkyl isomers.

It may be possible to carry out the alkylation and isomerisation steps in such a manner as to give a product containing the desired amounts of phenol and meta-monoalkyl phenol directly. Further amounts of unmodified phenol may be added to the isomeric mixture to produce a phenolic reactant capable of giving a resin with the desired properties.

Conditions for producing phenolic resins are well known to those skilled in the art. It is preferred to use the conditions which have proved satisfactory for the production of phenolic resins from cresol. It is preferred to use molar ratios of the phenolic reactant to formaldehyde in the range 1:0.70 to 1:0.95 and to carry out the reaction under alkaline conditions.

The process of the present invention may, however, be used for the production of novolak resins, in which an acid catalyst is used and a substantial excess of phenol is employed.

The composition of a typical phenolic reactant used in producing laminating resins contains the following components, all by weight:

(i)   mono-alkyl phenols,

|  |  |  |
|---|---|---|
| | ortho-isomer | ( 3-6 %) |
| | meta-isomer | (20-30%) |
| | para-isomer | ( 6-9 %) |
| (ii)  dialkyl phenols | | ( 3-5 %) |
| and(iii)  unmodified phenol | | (50-60%) |

The reaction between the aldehyde and the phenolic reactant is suitably carried out at elevated temperatures, for example 100 to 140°C.

The process of the present invention is particularly suitable for making phenolic resins for use in making laminates. Phenolic laminates obtained by impregnating sheets of fibrous material, for example paper, glass fibre, with phenolic resins are a well known class of materials as are phenolic resins suitable for use in making them. The process of the present invention is particularly suitable for making phenolic resins suitable for use as laminating varnishes in the production of laminates intended to have good electrical properties.

Examples of laminating varnishes according to the present invention are those having the following compositions:

|  | Parts by weight |
|---|---|
| Phenolic reactant | 100 |
| 44% Formalin | 60 |
| Drying oil | 5–50 |
| Sulphuric acid CS9 1.8 | a minor amount (e.g. 0.3) |
| Hexamine | 2 |
| A plasticiser | 0–60 |
| Solvents | to give resin content of 40%–60%, preferably 50%. |

Examples of suitable drying oils are linseed oil, tung oil and dehydrated castor oil. An example of a suitable plasticiser is cresyl diphenyl phosphate.

Examples of suitable solvents are toluene and methanol, preferably mixtures thereof.

The invention will now be described with reference to the following Example.

Example (E)

A laminate was prepared using a phenolic reactant which was a mixture of unmodified phenol (40% by weight) and isomeric isopropyl phenols enriched in the meta-isomer (60% by weight). The isomeric isopropyl phenols used in the phenolic reactant was derived by alkylation of phenol with propylene followed by isomerisation of the crude alkylate. The isomerised product forming the isomeric isopropyl phenols had the following composition:

| | |
|---|---|
| phenol | 33.6% |
| 2-isopropyl phenol | 6.8% |
| 3-isopropyl phenol | 36.1% |
| 4-isopropyl phenol | 10.4% |
| 2,4-diisopropyl phenol | 1.8% |
| 3,5-diisopropyl phenol | 3.6% |
| 2,6-diisopropyl phenol | 0.4% |

Miscellaneous unknown compounds to 100% by weight.

The following reactants were used to produce the resin solution initially:

| | Parts by weight |
|---|---|
| Phenolic reactant | 100 |
| 44% Formalin | 60 |
| Tung oil | 20 |
| Sulphuric acid (SG 1.84 | 0.3 |
| Hexamine | 2.0 |
| Cresyl diphenyl phosphate | 30 |
| Toluene | 25 |
| Methanol | 25 |

The phenolic reactant was charged to a reactor fitted with a reflux condenser followed by the sulphuric acid and the reactor contents heated to 90-110°C. The tung oil was added to the reactor over a 10 minute period, the reactor contents were held at 90-110°C for another 10 minutes and then cooled to 60°C.

The hexamine was added to the reactor as a slurry in water followed by the formalin (aqueous solution of formaldehyde). The reactor contents were then heated to reflux at atmospheric pressure and refluxed for 30 minutes.

The reactor contents were then evaporated at reduced pressure of about 25 inches Hg (635 mm Hg) at 90°C, and held under these conditions until the hot plate gel time at 170°C was 75-85 sec. The hot plate gel time is determined by applying a sample of the reactor contents to a metal plate at the indicated temperature and observing the time of the liquid to gel.

The cresyl diphenyl phosphate followed by the solvents were then added and the reactor contents mixed and cooled.

Tests A-D (Comparative tests not according to the invention).

Experiments were carried out as in Example (E) above but using in place of the isomeric mixture of phenols:

100% phenol alone (Test A)

40-42% m-cresol    (Test B)

80:20 weight ratio of phenol:styrene (Test C)

60:40 weight ratio of phenol:nonyl phenol (Test D).

In the case of the phenol/styrene, styrenated phenol was made in situ by adding the styrene over a period to the phenol/sulphuric acid at 90-110°C before the drying oil was added.

The properties of the resin solutions obtained in Tests A-D and Example (E) are shown in Table 1.

### Table 1.

| Experiment | A | B | C | D | E |
|---|---|---|---|---|---|
| Viscosity at 25°C (cS) | 112 | 80 | 120 | 120 | 115 |
| Specific gravity at 25/25°C | 1.068 | 1.053 | 1.047 | 1.016 | 1.044 |
| Loss in weight on heating at 135°C (%) (BS 2782 Method 107C) | 46.2 | 48.7 | 46.2 | 44.6 | 45 |
| Hot plate Gel Time (s) at 170°C | 115 | 150 | 170 | 170 | 160 |

Laminates nominally 1.5 mm thick were made from 10 mil Bleached Kraft Paper.  The paper was pre-impregnated with a water soluble phenolic resin to resin content 20-24% and volatiles 5-6% and then impregnated with the resin solutions to a total resin content of 50-52% and flow at 170°C 3-8% by drying in a continuous web in an oven at 130-160°C.

The laminates were made under pressure of 1500 lb/in$^2$ at 165°C for 45 minutes.  The laminates had the following properties:

**0026975**

| Experiment | A | B | C | D | E |
|---|---|---|---|---|---|
| Water absorption BS 5102 Type 1 (mg) | 30.3 | 23.3 | 27.7 | 33.3 | 26.3 |
| Cross breaking strength BS 5102 (M Pa) Length | 196 | 177 | 156 | 152 | 185 |
| Cross | 170 | 170 | 152 | 125 | 147 |
| Dielectric Breakdown NEMA L1-1-6.09 Condition D48/50 (Kv) | 24 | 22.7 | 16.5 | 22 | 20 |
| Surface and volume resistivity at 100°C BS 4584 Part 7  Surface (Mega  ohms) | 425 | 1425 | 1175 | 800 | 690 |
| Volume (Mega  ohm  metres) | 144 | 390 | 615 | 215 | 190 |

Punching Quality on a 1 (excellent) to 5 (poor) rating scale.

| XCELL | | A | B | C | D | E |
|---|---|---|---|---|---|---|
| | at 23°C | 4 | 1 | 5 | 3 | 2 |
| | at 60°C | 3 | 4 | 5 | 1 | 2 |

The laminates made from a crude phenolic product, derived by propylation of phenol followed by isomerisation of the alkylate to increase the meta-isomer content thereof, diluted with the specific amount of unmodified phenol had a good balance of the properties normally required in industrial laminates.

Thus, the phenolic reactant used in the process of the present invention has the following advantages over conventional prior art processes:

1)   The phenolic reactant used is more readily available than m-cresols derived from coal-tar.

2).   The method of producing the phenolic reactant and the facility of using a crude isomerised alkylate ensures that the reactant is commercially available at a lower cost than the pure isomers used in prior art processes.

Claims:

1. A process for producing a phenolic resin by reacting a phenolic reactant with formaldehyde or formaldehyde donor characterised in that the phenolic reactant comprises a mixture of the ortho-, meta- and para- substituted isomers of a mono-alkyl phenol in which (i) the alkyl group has 2 to 5 carbon atoms, and (ii) the meta-monoalkyl phenol content is from 10% to 50% by weight of the total phenolic reactant.

2. A process according to claim 1 characterised in that the alkyl group has 3 or 4 carbon atoms.

3. A process according to claim 1 or 2 characterised in that in the isomeric-mixture of mono-alkyl phenols the proportion by weight of the ortho-, meta- and para-isomers is in the range of 5-10:25-40:5-15 respectively.

4. A process according to any one of the preceding claims characterised in that the isomeric mixture of alkyl phenols contains in addition unmodified phenol.

5. A process according to claim 4 characterised in that the isomeric mixture of alkyl phenols contains 30-35% by weight of unmodified phenol.

6. A process according to claims 4 or 5 characterised in that the isomeric mixture of mono-alkyl phenols is derived by alkylation of phenol with an olefin followed by isomerisation of the crude alkylate.

7. A process according to claim 6 characterised in that the alkylation is carried out in the presence of a Lewis or Bronsted acid catalyst at a temperature between 50 and 160°C and the alkylate thus produced is catalytically isomerised at a temperature above 160°C for at least 1 hour.

8. A process according to claim 7 characterised in that the alkylation catalyst is montmorillonite activated by a mineral acid and the isomerisation is also carried out in the presence of the same catalyst.

9. A process according to any one of the preceding claims characterised in that the phenolic resin is prepared using a phenolic reactant comprising (i) an isomeric mixture of mono-alkyl phenols in which the ortho-, meta- and para-isomers are present in an amount by weight of 3-6%, 20-30% and 6-9% respectively, (ii) dialkyl phenols present in an amount by weight of 3-5% and (iii) unmodified phenol present in an amount by weight of 50-60%.

10. A process according to any one of the preceding claims characterised in that the reaction between the aldehyde and the phenolic reactant is carried out at a temperature between 100 and 140°C.

## DOCUMENTS CONSIDERED TO BE RELEVANT

| Category | Citation of document with indication, where appropriate, of relevant passages | Relevant to claim |
|---|---|---|
| X | <u>GB - A - 1 278 582</u> (BP CHEMICALS)<br>* page 1, lines 34 to 40; page 2, example 2 * | 1-5 |
| | <u>US - A - 3 859 395</u> (TERHUNE et al.)<br>* column 2, lines 20 to 50 * | 6-10 |
| A | <u>US - A - 2 215 596</u> (SEEBACH)<br>* column 2, lines 8 to 20 * | |
| | A. BACHMANN et al. "Phenoplaste"<br>1973, VEB DEUTSCHER VERLAG FÜR<br>GRUNDSTOFFINDUSTRIE, Leipzig,<br>pages 20, 31, 32<br>* page 31, lines 28, 29 * | 1-5 |
| A | "Ullmanns Encyklopädie der techni-<br>schen Chemie"<br>3rd edition, volume 13<br>1962, URBAN & SCHWARZENBERG, München,<br>Berlin,<br>pages 444 to 446<br>* page 444, paragraphs 3, 4;<br>page 446, paragraph 7 *<br><br>./.. | |

**CLASSIFICATION OF THE APPLICATION (Int. Cl.3)**

C 08 G 8/08
//H 01 B 3/36

**TECHNICAL FIELDS SEARCHED (Int.Cl.3)**

C 08 G 8/00
H 01 B 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | |
|---|---|---|
| Place of search<br>Berlin | Date of completion of the search<br>14-01-1981 | Examiner<br>KRAIL |

EPO Form 1503.1  06.78

European Patent Office

| DOCUMENTS CONSIDERED TO BE RELEVANT | | | CLASSIFICATION OF THE APPLICATION (Int. Cl.3) |
|---|---|---|---|
| Category | Citation of document with indication. where appropriate, of relevant passages | Relevant to claim | |
| D,A | SOCIETY OF PLASTICS ENGINEERS JOURNAL, Vol. 17, No. 7, July 1961 Stannford, Conn. J.H. FREEMAN et al. "Cured Phenolic Resins Plasticized by Substituents on the Aromatic Ring" pages 673 to 677 ---- | | |
| | | | TECHNICAL FIELDS SEARCHED (Int. Cl.3) |